# EUROPÄISCHE PATENTSCHRIFT

(11) **EP 1 960 061 B1**
(45) Veröffentlichungstag und Bekanntmachung des Hinweises auf die Patenterteilung: **05.08.2009**
(21) Anmeldenummer: 06804853.7
(22) Anmeldetag: 02.11.2006
(51) Int. Cl.: A62C 3/04, A01F 12/46, B65G 17/12, B65G 43/00

(54) **KETTENFÖRDERER**
CHAIN CONVEYOR
CONVOYEUR A CHAINE

(30) Priorität: 11.11.2005 DE 102005054289
(43) Veröffentlichungstag der Anmeldung: 27.08.2008
(73) Patentinhaber: Bühler AG, 9240 Uzwil (CH)
(72) Erfinder: SOLENTHALER, Karl, 9053 Teufen (CH); SNOEYS, Jef, 2310 Rijkevorsel (BE)
(74) Vertreter: Wilming, Martin
(86) Internationale Anmeldenummer: PCT/CH2006/000619
(87) Internationale Veröffentlichungsnummer: WO 2007/053968

(56) Entgegenhaltungen:
- EP-A2- 0 076 958
- US-A- 5 052 494
- US-A- 5 198 611

## Beschreibung

Die Erfindung betrifft einen Kettenförderer mit einer endlos umlaufenden Kette, auf der Förderelemente zur Förderung von vorzugsweise Schüttgut angeordnet sind. Die Erfindung betrifft gleichfalls Gurtbandelevatoren und dergleichen für vergleichbare Anwendungsfälle.

Derartige Kettenförderer oder Becherförderer werden besonders zum vertikalen Fördern von mehligen oder körnigen Schüttgütern eingesetzt, zum Beispiel in Mühlen- und Siloanlagen.

Sie weisen eine endlos umlaufende Kette resp. einen endlos umlaufenden Gurt auf. Beide endlosen Elemente laufen zwischen einem oberen und einem unteren Rad um, wobei das obere Rad mit einem Antrieb versehen ist.

Im Interesse eines gleichmässigen und gefahrlosen Betriebes ist eine Überwachung des Geradlaufs und der Geschwindigkeit erforderlich. Hierzu ist es zum Beispiel nach der EP-A-242193 bekannt, die Winkelposition eines Elevators, insbesondere Abweichungen von der Vertikalen zu überwachen und seine Arbeitsgeschwindigkeit automatisch zu regulieren.

Nach der US-PS 4366897 weist ein Gurtelevator eine Einrichtung zur Überwachung der Geschwindigkeit des Gurtes auf, bei der an der Innenseite des Gurtes ein Sensor angeordnet ist.

Ebenso ist es bekannt, metallische Becher mit seitlich angeordneten induktiven Sensoren zu detektieren.

In der EP-A-076958 ist ein explosionsgeschützter Senkrechförderer beschrieben, der in produktzu- oder produktabführenden Förderstrang mit Löschmittelsperren zum Abbruch von Explosionen versehen ist. Die Fortpflanzung von Explosionen aus dem Becherwerk heraus soll damit verhindert werden.

Um die Ausbreitung von Bränden oder Explosionen in Kettenförderern zu verhindern, ist es weiterhin bekannt, sogenannte Quenche oder FlamQuenche in die vertikalen Förderstränge einzubauen, um Flammen oder Explosionsdrücke über Berstscheiben auszuleiten. Mit derartigen Elementen kann jedoch.eine Ausdehnung von Flammen oder Explosionen in weiterführenden Fördersträngen nicht verhindert werden.

Der Erfindung liegt daher die Aufgabe zugrunde, einen Kettenförderer oder dergleichen zu entwickeln, mit dem die Nachteile des Standes der Technik vermeidbar sind und der eine sichere Entkopplung des Förderers von weiteren Förderelementen im Brand- oder Explosionsfall ermöglicht.

Die Lösung der Aufgabe erfolgt mit den Merkmalen des Patentanspruchs.

Durch die Anordnung einer Vorrichtung zur Einspeisung eines flammhemmenden Mittels im Bereich der oberen Produktaustragsöffnung kann eine Ausbreitung von Bränden oder Explosionen sowohl im Förderer als auch im Rohrbau verhindert werden.

Bevorzugte Ausführungsformen sind in den Unteransprüchen offenbart. So ist es vorteilhaft, eine zusätzliche Entkopplung in den vertikalen Schächten des Förderers vorzusehen.

Grundsätzlich ist der erfindungsgemässe Kettenförderer auch für horizontale Anwendungsfälle sowie für Gurtbandelevatoren geeignet.

Es können aktiv und passiv wirkende Explosionsschutzelemente verwendet werden, so dass die wirksamen Elemente unmittelbar (passiv) beim Explosions- oder Brandereignis platziert sind oder direkt (aktiv) in die Explosions- oder Brandzone wirken. Sie selbst sind ereignisbedingtem Verschleiss nicht ausgesetzt. Sie entkoppeln den anschliessenden Laufrohrbau, und der im Elevatorkopf eingebrachte Verschleissschutz wird nicht durch dritte Elemente gestört (zum Beispiel Verzicht auf abnehmende Wandstärken).

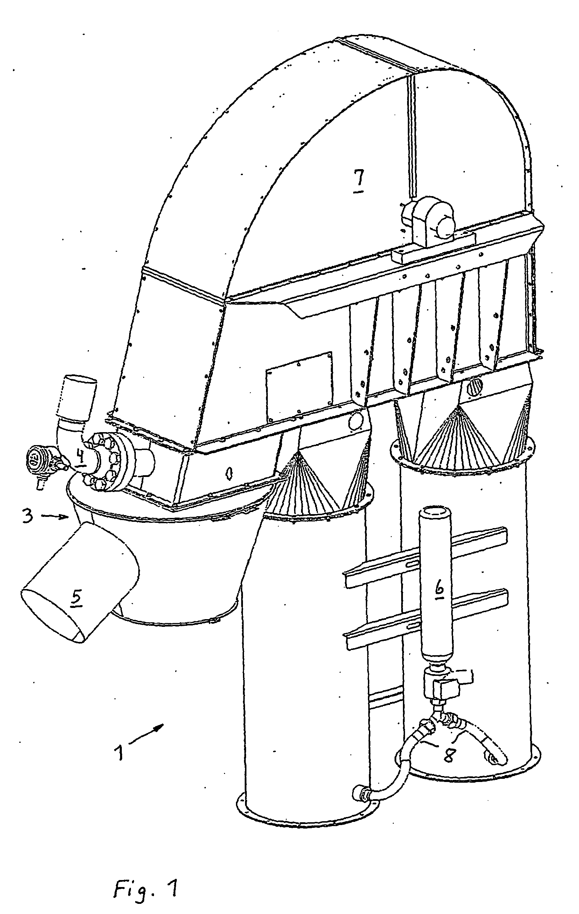

Die Erfindung wird nachfolgend in einem Ausführungsbeispiel anhand einer Zeichnung näher beschrieben. Die Zeichnung zeigt in
- Fig. 1:: einen Kettenförderer mit aktivem Explosionsschutzsystem

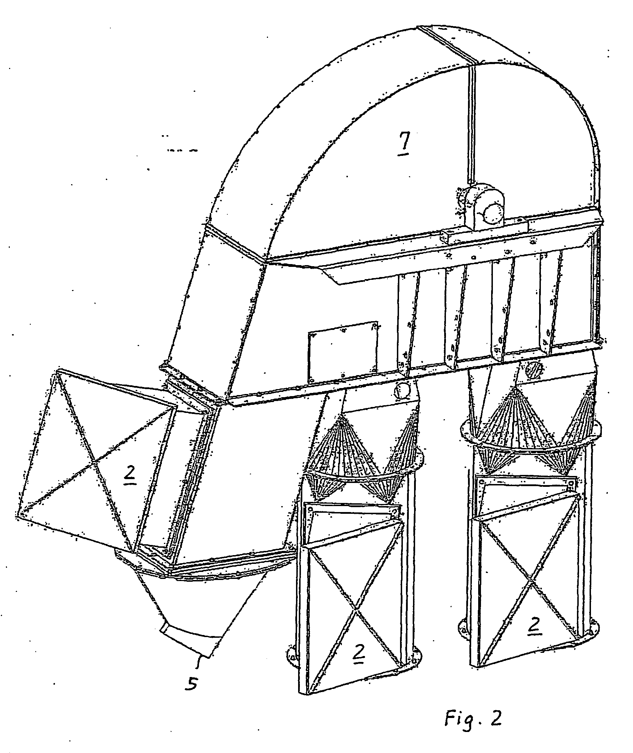

- Fig. 2:: einen Kettenförderer mit einem passiven System.

Ein Kettenförderer 1 weist eine, in vertikaler Richtung endlos umlaufende Förderkette mit Förderelementen auf, wobei der Umlauf zwischen einem oberen Umlenkrad und einem unteren Umlenkrad erfolgt. Das oberer Umlenkrad ist angetrieben.

Am (oberen) Produktauslauf resp. Elevatorkopf 7 ist ein rohrförmiges Element 3 mit einer Einspeisung 4 für Pulver vorgesehen. Im unteren Bereich ist das rohrförmige Element 3 mit dem weiteren Rohrbau 5, zum Beispiel zu Silozellen verbunden.

Mittels der Einspeisung 4 kann ein brand- oder explosionshemmendes Pulver unter Druck in den Kettenförderer 1 gepresst werden, so dass sich eine Flammenfront oder Explosionswelle nicht in den Rohrbau 5 ausbreiten kann und auch im Kettenförderer 1 selbst unterdrückt wird.

Durch die gezielte Anordnung der Einspeisung 4 kann mit ein und derselben Einspeisung 4 kann eine Explosion und/oder ein Feuer gleichzeitig im Elevatorkopf 7 und in der anschliessenden Rohrleitung unterdrückt resp. entkoppelt werden.

Zusätzlich ist noch mindestens ein weiterer Löschmittelcontainer 6 vorgesehen um eine Flamm- und/oder Explosionsausbreitung in den Elevatorfuss oder aus diesem heraus zu unterbinden. Der Löschmittelcontainer 6 weist Einspeisestellen 8 in die Elevatorgänge auf.

Bei einem passiven System kann an dieser Stelle ein Element mit Berstscheibe und EleQuench zur flammlosen Druckentlastung in den Raum oder dergleichen angeordnet sein. Dachdurchbrüche etc. können entfallen.

Beim passiven System sind beim Auslauf die Berstscheibe und EleQuench 2 derart platziert, dass sich beim Ereignen einer Explosion im Elevatorkopf der sich bildende Druck / Flamme direkt und sofort beim an den Auslauf anschliessenden Quench entweicht. Die Heftigkeit der Explosion wird somit im anschliessenden Rohr 3 und 5 stark gemindert, sodass sich ab einem bestimmten Längen- / Durchmesser- Rohrverhältnis die Flamme totläuft und damit die Rohrleitung ähnlich dem aktiven System auch entkoppelt ist.

## Patentansprüche

1. Kettenförderer oder dergleichen zum Fördern von Schüttgut mit zwischen einem Elevatorkopf (7) und einem Elevatorfuss endlos umlaufenden Förderelementen, wobei am Elevatorfuss ein Guteinlauf und am Elevatorkopf (7) ein Gutauslauf angeordnet sind, **dadurch gekennzeichnet, dass** am Gutauslauf des Elevatorkopfes (7) und vor einem anschliessenden Förderstrang oder Rohrbau (5) eine Einspeisung (4) für Löschmittel oder Quenche/Berstscheiben angeordnet sind.

2. Kettenförderer nach Anspruch 1, **dadurch gekennzeichnet, dass** er zwischen Elevatorkopf (7) und Elevatorfuss ein weiteres Mittel zur Einspeisung (8) von Löschmittel (6) aufweist.

3. Kettenförderer nach Anspruch 1 oder 2, **dadurch gekennzeichnet, dass** ein rohrförmiges Element (3) für die Einspeisung (4) zu einem Förderstrang unterhalb des Gutauslaufes am Elevatorkopf (7) angeordnet ist.

## Claims

1. A chain conveyor or the like for conveying loose material, with continuously revolving conveying elements situated between an elevator head (7) and an elevator base, wherein a material inlet is arranged at the elevator base, and a material outlet is arranged at the elevator head (7), **characterised in that** a feeder (4) for extinguishing agents or quenches/rupture disks are located at the material outlet of the elevator head (7) and in front of a subsequent conveyor train or pipeline array (5).

2. The chain conveyor according to claim 1, **characterized in that** it exhibits another feeding means (8) for an extinguishing agent (6) between the elevator head (7) and elevator base.

3. The chain conveyor according to claim 1 or 2, **characterized in that** a tubular element (3) for the feeder (4) to a conveyor train is arranged under the material outlet at the elevator head (7).

## Revendications

1. Convoyeur à chaîne ou similaire pour convoyer des marchandises au détail avec des éléments de convoyage se déroulant sans fin entre une tête d'élévateur (7) et un pied d'élévateur, dans lequel sur le pied d'élévateur une entrée de marchandise et sur la tête d'élévateur (7) une sortie de marchandise sont disposées, **caractérisé en ce que** à la sortie de marchandise de la tête d'élévateur (7) et avant une ligne de convoyage ou tubulure (5) s'y rattachant, une alimentation (4) d'agent extincteur ou des désactivateurs/ disques de rupture sont disposés.

2. Convoyeur à chaîne selon la revendication 1, **caractérisé en ce que** il présente entre la tête d'élévateur (7) et le pied d'élévateur une autre moyen d'alimentation (8) d'agent extincteur (6).

3. Convoyeur à chaîne selon la revendication 1 ou 2, **caractérisé en ce que** un élément tubulaire (3) pour l'alimentation (4) d'une ligne de convoyage est disposé en dessous de la sortie de marchandise sur la tête d'élévateur (7).
